# EUROPEAN PATENT APPLICATION

(11) **EP 1 619 675 A1**
(43) Date of publication of application: **25.01.2006**
(21) Application number: 04017196.9
(22) Date of filing: 21.07.2004
(51) Int. Cl.: G11B 7/005

(54) **Reproduction device for optical record carrier having an improved laser diode lifetime**

(71) Applicant: DEUTSCHE THOMSON-BRANDT GMBH, 78048 Villingen-Schwenningen (DE)
(72) Inventor: Rutschmann, Richard, 79793 Wutöschingen (DE)
(74) Representative: Kurth, Dieter

(57) **Abstract**

The present invention relates to a method and an arrangement in reproduction devices for optical record carrier to improve the laser diode lifetime. This is achieved by switching off the laser diode for a time period in which a buffer memory of the reproduction device has a buffer fill level, which exceeds a predetermined buffer level. According to a further embodiment of the invention the laser diode is switched off for an invariant time period if an upper buffer fill level is reacted. The invention is applicable in reproduction devices for optical record carrier like CD- or DVD-player.

## Description

### FIELD OF THE INVENTION

The present invention relates to a method and an arrangement in reproduction devices for optical record carrier to improve the laser diode lifetime.

### BACKGROUND OF THE INVENTION

Reproduction devices for optical record carrier as e.g. CD and DVD player are well know and such devices in addition to home applications are use as portable devices or in vehicles all over the world as well as under different environment conditions. Key requirements for a reproduction device for optical record carrier are quality, robustness and especially lifetime of the components. One of the most critical components in terms of lifetime in reproduction devices for optical record carrier is the laser diode, in particular due to the inverse trend in combination with high temperature and switch on duration.

But since the number of laser diode suppliers is limited and the guaranteed specification for lifetime especially under large temperature spread is almost the same for everybody, the only means to improve the lifetime seems to be an improvement in the efficiency of the optical design or a specific control algorithm of the laser current or power respectively. Different ways of dynamic laser control taking into account the disc reflectivity are considerable to improve the lifetime. All are relying on the fact that the lifetime of a laser diode is reduced the higher the driving current and hence the laser power and also the higher the ambient temperature is.

### SUMMARY OF THE INVENTION

The present invention concerns a circuit and method for driving a laser diode in a reproduction device for optical record carrier to improve the laser diode lifetime.

One aspect of the invention is thus directed to a circuit for controlling a laser diode in a reproduction device for optical record carrier in such a way that the laser diode lifetime becomes improved.

One such circuit includes:
an optical pickup having a laser diode for scanning said optical record carrier,
a buffer memory for receiving and providing information or data stored on said record carrier and
a switch for switching off said laser diode dependent on an upper buffer fill level and switching on said laser diode after a predetermined time or dependent on a predetermined buffer fill level lower than said upper buffer fill level of said buffer memory.

A further aspect of the invention is thus directed to a method for controlling a laser diode in a reproduction device for optical record carrier in such a way that the laser diode lifetime becomes improved.

One such method comprises:
switching on the laser diode and receiving information or data read from the optical record carrier in a buffer memory until an upper buffer fill level is reached; and
switching off the laser diode for a predetermined period of time or until a predetermined buffer fill level lower than said upper buffer fill level is reached.

A standard player or reproduction device for optical record carrier is using a so-called buffer memory from which information or data stored on the record carrier are read out at nominal speed whereas the ingoing data are written at higher speed. That means that the ingoing data stream at an upper buffer fill level has to be interrupted from time to time to avoid a buffer memory overflow. During that period of time or better a portion of that period of time the laser diode is switched off which directly leads to a corresponding improvement of lifetime of the laser diode.

A further and implicit effect of the laser-off-time is the reduction of power consumption and hence the ambient temperature of the laser diode. Since the lifetime of the laser diode is, among other factors dependent on the ambient temperature, it's obvious that a reduction of the temperature additionally leads to a further improvement of lifetime.

This effect is amplified by the fact that all servo control as focus and tracking is switched off too, while the laser diode is off, which reduces further the power consumption and thus the ambient temperature of the laser diode.

However the laser-off-time needs to be controlled dependent on many conditions, especially on the filling level of the buffer memory. Also to achieve a long laser-off-time the laser and hence the focus and tracking loops should be switched on close to a tangential position, where they have been switched off, otherwise a complete focus search sequence has to be executed due to different focus offsets at different tangential positions on the discs due to the vertical eccentricity of the disc. It has to be ensured that at any time a sufficient amount of data or information or data is stored in the buffer memory for continuously providing information or data stored on said record carrier from said buffer memory. This is achieved by switching off the laser diode for a laser off period until a predetermined buffer fill level lower than said upper buffer fill level and higher than a lower buffer fill level is reached. The laser-off-time thus can be calculated as play time minus buffer memory fill time minus system recovery and resynchronisation time, wherein said play time depends on the relationship between buffer memory size and the outgoing data rate, said buffer memory fill time depends on the relationship between buffer memory size and the ingoing data rate, and said system recovery and resynchronisation time depends on the time needed for laser refocusing and jumping to a track where reading from the record carrier has been interrupted or the laser diode has been switched off. An upper fill level of the buffer memory decreases during the laser-off-time according to an outgoing data rate required e.g. for audio and/or video signal processing or in other words for continuously reproducing information or data stored on the optical record carrier. The buffer memory thus becomes empty after a certain playtime. However, a refill of the buffer memory is started at a predetermined time or at a buffer fill level before the buffer memory becomes empty to ensure a continuous reproduction of information or data stored on the optical record carrier also if just at the point where re-filling of the buffer memory starts a data rate higher as an average data rate is requested for uninterrupted audio and/or video signal processing. Said buffer fill level is a so-called lower buffer fill level of the buffer memory.

The laser-off-time could theoretically be longer since the buffer won't be empty at the point re-filling will be started. Due to the fact that the ingoing data rate is higher than the outgoing data rate and data leave the buffer memory also during refill the buffer the refill of the buffer memory is performed at a resulting ingoing data rate, which is the ingoing data rate minus the outgoing data rate. Said resulting data rate determines the time required to fill the buffer memory up to an upper buffer fill level. If said upper buffer fill level is reached the laser is switched off again to improve the laser diode lifetime. As the refill of the buffer memory requires reading data from the record carrier, a system recovery and resynchronisation is necessary after a laser-off-time. The time needed for system recovery and resynchronisation determines the time for which the laser diode has to be switched on after a laser-off-time to ensure a start of refill at a lower buffer fill level. That means that the moment at which the laser diode has to be switched on after a laser-off-time and also the laser-off-time itself can be calculated dependent on a buffer fill level, a time expected for system recovery and resynchronisation as well as the refill of the buffer, which shall start if a lower fill level of the buffer is reached. The upper fill level of the buffer may be selected according to the buffer size or slightly below the complete buffer memory size to avoid buffer overflow.

According to a simplified embodiment of the invention the laser diode is switched off for an invariant period of time if said upper buffer fill level is reached. Said predetermined time is calculated according to an expected outgoing data rate maximum and a maximum system recovery and resynchronisation time. Said simplified embodiment of the invention does not provide a maximum laser-off-time because e.g. system recovery and resynchronisation time vary dependent on the record carrier scanning point, however, just an upper buffer fill level indication and a timer are necessary for driving a laser diode in a reproduction device for optical record carrier to improve the laser diode lifetime. Further side effects of the invention are the reduced power consumption as well as reduced ambient temperature for portable devices. The laser-off-time leads to a linear and significant improvement of the lifetime of the laser diode. The magnitude of improvement is mainly dependent on the buffer size, the ingoing data rate and rotational speed of the record carrier respectively, as well as the system ability to recover from off-mode. In general, the bigger the buffer memory and as faster the rotational speed of the disc is the longer is the laser-off-time and consequently the longer the lifetime. Several different embodiments to control a switch for switching off the laser diode for a certain time or until the buffer fill status decreased for a predetermined buffer fill level after an upper buffer fill level is reached are possible as mentioned above. By way of a following embodiment for a standard DVD player as an example will be shown that a laser-off-time for about 36% of the video playback time is reached and thus improves the laser diode lifetime in a reproduction device for optical record carrier by the same ratio.

### BRIEF DESCRIPTION OF PREFERRED EMBODIMENTS

For a more complete understanding of the present invention and the advantageous thereof, reference is now made to the following descriptions taken in conjunction with the accompanying drawings which illustrate one ore more embodiments of the present invention.
- Fig.1: illustrates a schematic diagram of the buffer filling level over the time in a reproduction device for optical record carrier having improved laser diode lifetime,
- Fig.2: illustrates a block diagram of a reproduction device for optical record carrier having improved laser diode lifetime,
- Fig.3: illustrates a schematic diagram of the buffer filling level over the time in a standard reproduction device for optical record carrier; and
- Fig.4: illustrates a block diagram of a standard reproduction device for optical record carrier.

### DETAILED DESCRIPTION OF PREFERRED EMBODIMENTS

Like numerals and characters designate like elements throughout the figures of the drawings.

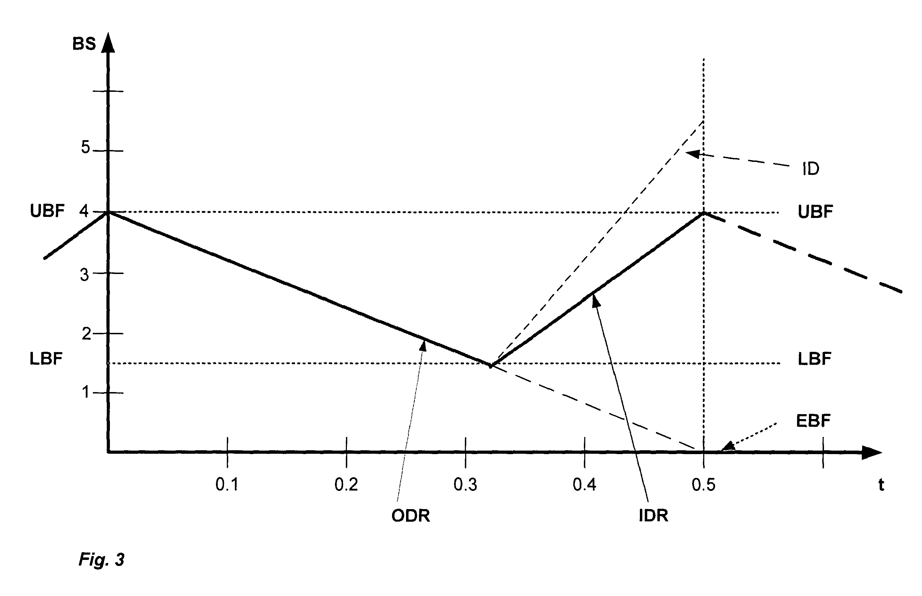

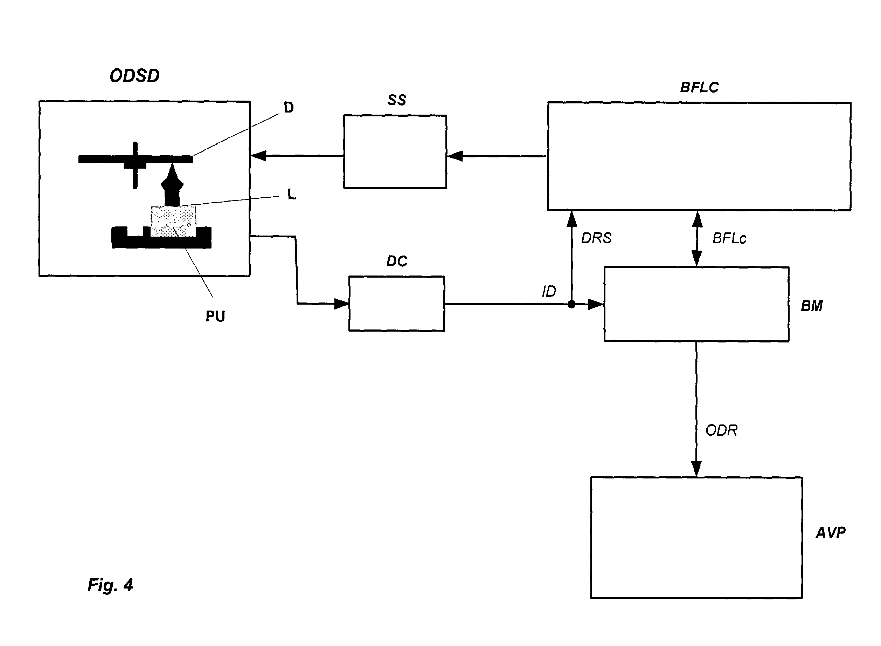

Reference is initially directed to Fig. 4, which illustrates a block diagram of a standard reproduction device for optical record carrier. An optical disc scanning device ODSD in a reproduction device for optical record carrier D scans information or data stored on record carrier D by using a pickup PU having at least one laser diode L, which provides the laser beam for scanning said optical record carrier D. The optical record carrier is for example a CD or DVD. Reproduction devices for optical record carrier D are well known as CD-player or DVD-player or corresponding drives in computer applications. Such devices have a buffer memory BM for receiving and providing information or data stored on said record carrier D. The buffer memory BM receives ingoing data ID via a data channel DC at a data rate, which is higher than an outgoing data rate ODR to reproduce information or data stored on said record carrier D via an audio or video processing unit AVP connected to said buffer memory BM. That means that the stream of incoming data ID has to be interrupted from time to time to avoid an overflow of the buffer memory BM. A buffer fill level controller BFLC coupled to the buffer memory BM controls the process of data resynchronisation DRS after an interruption of reading data from the record carrier D and fills said buffer memory BM with sufficient data for a continuous reproduction of information or data. A servo system SS is connected to said buffer fill level controller BFLC to ensure that corresponding information or data from the record carrier D are provided by the optical disc scanning device ODSD. As the data rate of ingoing data ID is higher than the outgoing data rate ODR, the amount of information or data stored in the buffer memory BM increases to an upper buffer fill level UBF, which corresponds to or is slightly lower than a buffer size BS of said buffer memory BM and decreases afterwards until a lower buffer fill level LBF is reached and a refill of the buffer memory BM with information or data starts as shown in Fig. 3. Fig. 3 illustrates that the buffer memory BM is refilled at a resulting ingoing data rate IDR, which results from the difference between the data rate of ingoing data ID and the outgoing data rate ODR. The start of refill from a lower buffer fill level LBF higher than a buffer empty EBF status of the buffer memory is selected to ensure a continuous reproduction of information or data also in a case of a temporarily increased outgoing data rate ODR as it e.g. in a DVD-player occurs. Said standard behaviour of a reproduction device for optical record carrier D is used to improve the lifetime of a laser diode L, which forms the most critical component in terms of lifetime in a reproduction device for optical record carrier D.

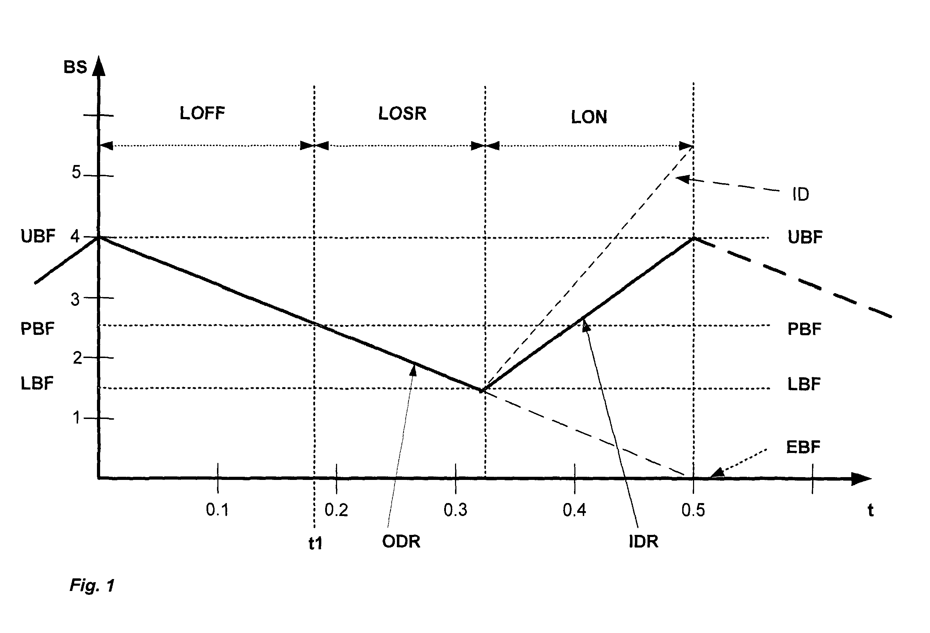

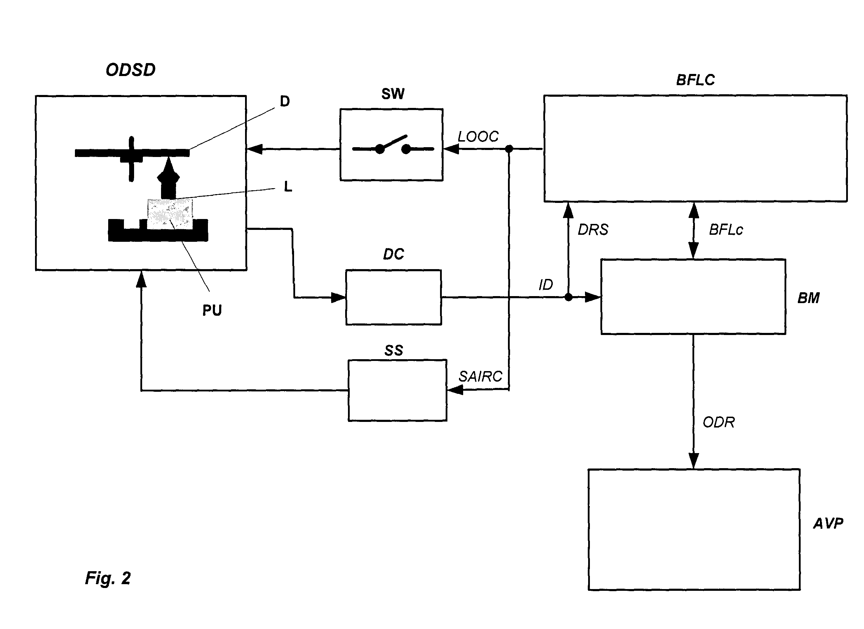

Fig. 2 illustrates a block diagram applicable for different embodiments of such a device having an improved laser diode lifetime, which includes a switch SW for switching off said laser diode L dependent on an upper buffer fill level UBF of the buffer memory BM and switching on said laser diode L after a predetermined time t1 or dependent on a predetermined buffer fill level PBF lower than said upper buffer fill level UBF. A control input of said switch SW is connected to a buffer fill level controller BFLC, which outputs a first command or signal indicating that an upper buffer fill level UBF is reached or has been exceeded and also outputs a second command or signal after a predetermined time or indicating that a predetermined buffer fill level PBF lower than said upper buffer fill level UBF is reached or the fill status of the buffer memory BM is below said predetermined buffer fill level PBF. The embodiments realise a laser on/off control LOOC, for which a standard buffer fill level controller BFLC and if required a timer, both normally available in a standard reproduction device for optical record carrier D can be used. The laser on/off control LOOC of the laser diode L improves or extends the lifetime of the laser diode L, because the lifetime of a laser diode L, which is a light emitting component, is mainly determined by total switch on duration and an ambient temperature of the laser diode L. The laser on/off control LOOC of the laser diode L in a reproduction device for optical record carrier D during a continuous reproduction of information or data stored on a record carrier D becomes possible because the time needed for laser on and servo recovery LOSR is shorter than a time in which the outgoing data rate ODR of the buffer memory BM reduces a buffer fill level from an upper buffer fill level UBF to a lower buffer fill level LBF, as illustrated in Fig. 1. The example illustrated in Fig. 1 shows a schematic diagram of a buffer fill status over a time period t of a standard DVD player, which typically has:
a buffer memory BM or so-called track buffer having a buffer size BS of 4Mb,
an outgoing data rate ODR, which is as an average data rate for movies of about 8Mb/s,
an ingoing data rate of 22Mb/s in a two times constant velocity scanning mode,
a laser on and refocusing time of about 50ms,
a jump time of about 40 ms and
a latency time of about 50ms at the outer diameter of the record carrier D.

That means, as shown in Fig. 1, that during a play or reproduction time of 0.5 seconds and with a lower buffer fill threshold of about 1.5 Mb already in a standard DVD player the laser diode L may be switched off for a period of at least 0.18 seconds without to disturb the reproduction of information or data. The laser off LOFF for about 36% of the video playback time improves the lifetime of the laser diode L by the same ratio. This circumstance is used to improve the lifetime of the laser diode L in reproduction devices for optical record carrier D. The magnitude of improvement is mainly dependent on the buffer size, the outgoing data rate ODR, the data rate of ingoing data ID and rotational speed respectively, as well as the system ability to recover from off-mode. In general, the bigger the buffer memory BM and available RAM respectively and as faster the rotational speed of the disc is the longer is the laser-off-time and consequently the longer the lifetime of the laser diode L.

The embodiments described here are given as examples only and a person skilled in the art may realise other embodiments of the invention while remaining in the scope of the invention by using the concept of switching off the laser diode L in a reproduction device for optical record carrier D during reproducing information or data stored on the record carrier D. The laser diode L is switched off for a laser off LOFF time during a play or reproduction time determined by said laser off LOFF time, a laser on and servo recovery LOSR time and a laser on LON time during which the buffer memory becomes refilled, as shown in Fig. 1.

## Claims

1. A reproduction device for optical record carrier (D) comprising:
an optical pickup (PU) having a laser diode (L) for scanning said optical record carrier (D),
a buffer memory (BM) for receiving and providing information or data stored on said record carrier (D) and
a switch (SW) for switching off said laser diode (L) dependent on an upper buffer fill level (UBF) of said buffer memory (BM) and switching on said laser diode (L) after a predetermined time (t1) or dependent on a predetermined buffer fill level (PBF) lower than said upper buffer fill level (UBF).

2. A reproduction device according to claim 1, wherein said switch (SW) for switching off said laser diode (L) dependent on an upper buffer fill level (UBF) of said buffer memory (BM) is controlled by a detector indicating the upper buffer fill level (UBF) of said buffer memory (BM) and a timer switching on said laser diode (L) after a predetermined time (t1) after switching off said laser diode (L).

3. A reproduction device according to claim 1, wherein said switch (SW) for switching off said laser diode (L) dependent on an upper buffer fill level (UBF) and switching on said laser diode (L) dependent on a predetermined buffer fill level (PBF) lower than said upper buffer fill level (UBF) of said buffer memory (BM) is controlled by a buffer fill level controller (BFLC) connected to said buffer memory (BM) for indicating the upper buffer fill level (UBF) and for indicating a predetermined buffer fill level (PBF) of said buffer memory (BM).

4. A reproduction device according to claim 3, further including a servo system (SS) coupled to said buffer fill level controller (BFLC) for activating, inactivating and recovering the servo system (SS).

5. A reproduction device of claim 2, further including a servo system (SS) coupled to said detector indicating the upper buffer fill level (UBF) of said buffer memory (BM) for inactivating the servo system (SS) and coupled to said timer for switching on said laser diode (L) after a predetermined time (t1) after switching off said laser diode (L) for activating and recovering the servo system (SS).

6. A method of controlling a laser diode (L) in a reproduction device for optical record carrier (D) in which information or data scanned from said optical record carrier (D) are written into a buffer memory (BM) at a higher data rate than read out from said buffer memory (BM), the steps of the method comprising:
switching on the laser diode (L) and receiving information or data read from the optical record carrier (D) in a buffer memory (BF) until an upper buffer fill level (UBF) is reached; and
switching off the laser diode (L) for a laser off (LOFF) period of time until a predetermined buffer fill level (PBF) higher than a lower buffer fill level (LBF) is reached or switching off the laser diode (L) for a predetermined time (t1) to improve a lifetime of said laser diode (L).

7. The method of controlling a laser diode (L) according to claim 6, wherein the upper buffer fill level (UBF) corresponds to a buffer size (BS) or is a level slightly below a buffer size (BS) of the buffer memory (BM).

8. The method of controlling a laser diode (L) according to claim 6, wherein the predetermined buffer fill level (PBF) varies according to a period of time needed for laser on and servo recovery (LOSR) and an outgoing data rate (ODR) of the buffer memory (BM) reduces a buffer fill level to a lower buffer fill level (LBF) or below a lower buffer fill level (LBF).

9. The method of controlling a laser diode (L) according to claim 6, wherein said laser off (LOFF) period of time is a predetermined time (t1), which is an invariant period of time determined according to a maximum of an outgoing data rate (ODR) read out from said buffer memory (BM) and a maximum of a time needed for laser on and servo recovery (LOSR).

10. A reproduction device for optical record carrier (D), wherein a buffer fill level of a buffer memory (BM) above a predetermined buffer fill level (PBF) is used to switch off a laser diode (L) scanning said record carrier (D) for an improved lifetime of the laser diode (L) or a reduced power consumption of the reproduction device.
